# EUROPEAN PATENT APPLICATION

(11) **EP 1 548 641 A1**
(43) Date of publication of application: **29.06.2005**
(21) Application number: 03791372.0
(22) Date of filing: 28.08.2003
(51) Int. Cl.: G06K 19/10, B65G 61/00, B41J 3/01

(54) **METHOD FOR PREVENTING FALSE INDICATION IN COMMODITY DISTRIBUTION AND LABEL WRITE DEVICE HAVING FALSE ALTERATION PREVENTION FUNCTION USED FOR THE SAME**

(30) Priority: 30.08.2002 JP 2002253697
(71) Applicant: Riken, Wako-shi, Saitama 351-0198 (JP); CHROMIC Co., Ltd., Tokyo 101-0041 (JP)
(72) Inventor: DATE, Munehiro, 2-1, Hirosawa Wako-shi, Saitama 351-0198 (JP); KAIMAI, Mitsuru, Tokyo 101-0041 (JP); MASUDA, Akira, Abiko-shi, Chiba 270-1175 (JP)
(74) Representative: Grünecker, Kinkeldey, Stockmair & Schwanhäusser Anwaltssozietät
(86) International application number: PCT/JP2003/010930
(87) International publication number: WO 2004/021272

(57) **Abstract**

Rewritable labels 10 capable of erasing and writing information are used as a buying form I and shipping form O incapable of being falsified. Each rewritable label has a barcode 2 in which a serial number N is written in a mode incapable of being erased, and an erasable two-dimensional code 4 for writing commodity information. In the two-dimensional code 4 of the buying form I, supplier's commodity information and the serial number N of the buying form I are written in a mode incapable of being falsified. In the two-dimensional code 4 of the shipping form O, at least some of contents of the two-dimensional code 4 of the buying form I, new commodity information, and the serial number N of the shipping form O are written in a mode incapable of being falsified.

## Description

### BACKGROUND OF THE INVENTION

### Technical Field of the Invention

The present invention relates to a false labeling preventing method in commodity distribution and a label writing apparatus with a falsification preventing function for use in the method.

### Description of the Related Art

Meats such as beef, pork, and chicken, or fishes such as tuna (hereinafter referred to simply as "commodities") are sold to consumers from places of production or fishing ports (hereinafter referred to as "place of origin") via a plurality of traders such as a distribution center, market, process center, supermarket, and general stores. These traders receive, from suppliers, buying forms in which commodity origin places, qualities, grades, weights and the like are written, perform secondary processing such as subdivision, and prepare and attach new shipping forms every secondary processed commodity based on the buying forms to ship the commodity.

In the above-described process of the commodity distribution, while the secondary processing and form preparation are repeated by the plurality of traders, the forms are falsified or forged, the origin places, qualities, grades, and the like of foods finally sold to the consumers are falsely labeled, and pad a high-quality commodity in some case.

In this case, confidences of the quality labeling and the like of the commodity are lost, the consumers cannot securely purchase the commodity, stores lose confidences and further fall into sales depression, and commodity distribution is entirely adversely affected. However, it has heretofore been difficult to specify the trader which has performed the false labeling or to prevent the padding, and much time has been required in restoring the confidences of the whole industry.

Therefore, there has been a demand for a false labeling preventing system in which the false labeling can be prevented, a distribution route of the corresponding commodity can be exactly traced (this function will be hereinafter referred to as "traceability") even if the false labeling is performed, dishonest dealers which have performed the false labeling can be easily specified, and the padding can be prevented, but an adapted system has not heretofore existed.

It is to be noted that a rewritable label for use in the present invention is described in [Patent Document 1] and the like.

### [Patent Document 1] Japanese Patent Application Laid-Open No. 2002-215038 "Rewriting Method and Apparatus of Reversible Photosensitive Paper with Two-Dimensional Code"

Therefore, to solve the problem, in a specific commodity distribution industry, a neutral data center is established, a large number of formats of traders handing products are unified, the whole industry is integrated, and one-dimensional database is prepared. This has been partially studied, but much cost and time are required for construction of the system, and there has been a problem that means for preventing false labeling, securing "traceability", specifying dishonest dealers, and preventing the padding have not been established yet.

### SUMMARY OF THE INVENTION

The present invention has been developed in order to meet the above-described demand. That is, an object of the present invention is to provide a false labeling preventing method in commodity distribution, which is capable of realizing (1) preventing of false labeling, (2) securing of "traceability", and (3) specifying of a dishonest dealer which has performed the false labeling, and preventing of padding with a comparatively simple facility and which is easily spread in the whole industry, and a label writing apparatus with a falsification preventing function for use in the method.

According to the present invention, there is provided a false labeling preventing method in commodity distribution, comprising the steps of: receiving from a supplier, a buying form I of commodity information, which is incapable of being falsified; preparing a shipping form O including all contents of the buying form and new commodity information and incapable of being falsified based on the buying form I; and attaching the shipping form to the secondarily processed commodity and shipping the commodity.

According to the method of the present invention, the buying form I received from the supplier cannot be falsified, and the shipping form O to be attached to and shipped with the secondarily processed commodity include the whole contents of the buying form and new commodity information based on the buying form I, and cannot be falsified. Therefore, in a label (corresponding to the buying form I) attached to the commodity (e.g., food) sent to a final consumer after repeating the steps, commodity information of all traders from a first shipper is written in a state incapable of being falsified.

Therefore, in a case where new commodity information different from the buying form I is added in a certain trader, contents difference (i.e., falsification or false labeling) is instantly detected by the next trader that has bought this, and therefore the false labeling can be prevented in advance. Even if a plurality of traders do not notice the false labeling (falsification), and the false labeling is detected after the commodity reaches the consumer, the distribution route of the commodity is exactly traced (securing of the "traceability"), and the trader (dishonest dealer) which has performed the false labeling can be instantly specified, because the commodity information of all the traders from the first shipper is written in a state incapable of being falsified.

According to a preferable mode for carrying out the present invention, the method further comprises the steps of: using information erasable and writable labels (10) as the buying form I and shipping form O incapable of being falsified, each of the labels comprising a read-only storage region (2) written in a mode in which a serial number N is incapable of being erased, and an erasable writable storage region (4) for writing the commodity information; writing the supplier's commodity information and the serial number N of the buying form I in a two-dimensional code (4) of the buying form I in a mode incapable of being falsified; and writing at least some of the contents of the two-dimensional code (4) of the buying form I, the new commodity information, and the serial number N of the shipping form O in the two-dimensional code (4) of the shipping form O in the mode incapable of being falsified.

The label (10) is a rewritable label and/or a label with an IC chip with respect to which it is possible to erase and write the information, the read-only storage region (2) is a barcode or ROM written in a mode in which it is impossible to erase the serial number N, and the writable storage region (4) is an erasable two-dimensional code and/or RAM.

When the label (10) (rewritable label and/or label with the IC chip) is used as the buying form I and the shipping form O, the contents of the buying form I are erased simultaneously with preparation of the shipping form O, and use-around such as double use can be prevented.

Moreover, in addition to the writable storage region (4) (two-dimensional code and/or RAM), the read-only storage region (2) in which the serial number N is written in a state incapable of being erased is disposed in the label, and the serial number N of the shipping form O is also written in the writable storage region (4) of the shipping form O in the mode incapable of being falsified. Therefore, in a case where the number is simply copied to another rewritable label, the copied serial number N of the rewritable label necessarily differs from the serial number N written in the writable storage region (4).

Therefore, by check of the serial number N, a forged copy can be easily checked, and padding of a high quality product can be prevented.

Moreover, the mode of the buying form I incapable of being falsified preferably comprises commodity information and its issuer name encrypted by a secret key inherent in the supplier, and the mode of the shipping form O incapable of being falsified comprises commodity information and its issuer name encrypted by a secret key inherent in the shipper.

By this method, when referring to a published database from the issuer name, and obtaining a public key of the shipper, anyone can decipher the contents of the buying form I and the shipping form O, but the falsification by the third party can be prevented because there is not any secret key. Since the writable storage region (4) does not include the public key, a storage capacity can be reduced.

Moreover, the mode of the buying form I incapable of being falsified preferably comprises commodity information and its public key encrypted by a secret key inherent in the supplier, and the mode of the shipping form O incapable of being falsified comprises commodity information and its public key encrypted by a secret key inherent in the shipper.

Also by this method, anyone can decipher the contents of the buying form I and the shipping form O by the public key of the supplier, and that of the shipper, but the falsification by the third party can be prevented because there is not any secret key. Since the writable storage region (4) includes the public keys, the storage capacity enlarges, but the contents can be instantly read by the keys without referring to the published database.

Moreover, the mode of the buying form I incapable of being falsified may comprise commodity information to which electronic signature inherent in the supplier has been attached, and the mode of the shipping form O incapable of being falsified may comprise commodity information to which electronic signature inherent in the shipper has been attached.

By this method, any third party reads the contents of the buying form I and the shipping form O, but the electronic signature is attached, and therefore the falsification by the third party can be prevented.

According to a preferable mode for carrying out the present invention, the method further comprises the steps of: checking falsification capability of the buying form I using a label writing apparatus (20) capable of reading, erasing, writing the label (10); and preparing the shipping form O adapted to the buying form I only in a case where "falsification capability: NO".

By this method, since the falsification capability of the buying form I is checked with the label writing apparatus (20), the false labeling or the forged copy in the supplier can be found early.

Moreover, only in the case where "falsification capability: NO", the shipping form O adapted to the buying form I is prepared, and the preparation of the shipping form O falsified by mistake can be prevented in advance.

The method further comprises the steps of: reading the read-only storage region (2) and the writable storage region (4) of the buying form I; checking legitimacy of the supplier's public key or electronic signature, and identity of the serial numbers of the read-only storage region (2) and the writable storage region (4); and judging that "falsification capability: NO" only in a case when the public key or the electronic signature is legitimate and the serial numbers are the same.

By this method, the legitimacy of the public key or the electronic signature, and the forged copy can be easily checked.

The method further comprises the steps of: writing at least some of the contents of the two-dimensional code (4) of the buying form I, new commodity information, and the serial number N of the shipping form O in the writable storage region (4) of the shipping form O in a mode incapable of being falsified; and setting a new shipping form O to be capable of being prepared only in a range in which a total amount of the buying form I is not exceeded, and erasing the original buying form I at a time of preparation of the shipping form O.

By this method, the false labeling is prevented, the "traceability" is secured, and the extra shipping form O can be prevented from being prepared or absorbed exceeding the total amount of the buying form I. Moreover, the contents of the buying form I are erased simultaneously with the preparation of the shipping form O, use-around such as double use can be prevented, and the padding of the high-quality product can be prevented.

Moreover, according to the present invention, there is provided a label writing apparatus with a falsification preventing function, for receiving a buying form I of commodity information from a supplier, preparing a shipping form O including new commodity information based on the buying form I, and attaching the shipping form to a secondarily processed commodity to ship the commodity,
the buying form I and the shipping form O comprising: labels (10) each comprising a read-only storage region (2) in which a serial number N is written in a mode incapable of being erased, and an erasable writable storage region (4) for writing the commodity information, and being capable of erasing and writing the information,
the label writing apparatus having a function of reading, erasing, and writing the information with respect to the label (10), a check function of checking falsification capability of the buying form I, and setting the shipping form O to be capable of being prepared only in a case where "falsification capability: NO", a falsification preventing function of writing, in the two-dimensional code (4) of the shipping form O, at least some of the contents of the writable storage region (4) of the buying form I, new commodity information, and the serial number N of the shipping form O in a mode incapable of being falsified, and a forging preventing function of setting a new shipping form O to be capable of being prepared only in a range in which a total amount of the buying form I is not exceeded, and erasing the original buying form I at a time of the preparation of the shipping form O.

According to a preferable mode for carrying out the present invention, the label (10) is a rewritable label and/or an IC-chip-containing label capable of erasing and writing the information, the read-only storage region (2) is a bar code or a ROM in which the serial number N is written in a mode incapable of being erased, and the writable storage region (4) is an erasable two-dimensional code and/or a RAM.

Since the falsification capability of the buying form I is checked by the check function of the label writing apparatus, the false labeling or the forged copy in the supplier can be found early.

Moreover, by the falsification preventing function, the false labeling is prevented, and the "traceability" can be secured.

Furthermore, by the forging preventing function of this label writing apparatus, the extra shipping form can be prevented from being prepared or abused exceeding the total amount of the buying form I, the contents of the buying form I can be erased simultaneously with the preparation of the shipping form O, use-around such as double use can be prevented, and the padding of the high-quality product can be prevented.

Other objects and advantageous characteristics of the present invention will be apparent from the following description with reference to the accompanying drawings.

### BRIEF DESCRIPTION OF THE DRAWINGS

Fig. 1 is a schematic explanatory view of a commodity distribution industry to which the present invention is applied;
Fig. 2 is a diagram showing one example of a rewritable label 10;
Figs. 3A and 3B show an example of a QR code which is one type of a two-dimensional code;
Fig. 4 is a whole constitution diagram of a label writing apparatus with a falsification preventing function of the present invention;
Fig. 5 is a constitution diagram of a write head 22 of Fig. 4; and
Fig. 6 is a diagram showing an embodiment of a false labeling preventing method of the present invention.

### DESCRIPTION OF THE PREFERRED EMBODIMENT

A preferable embodiment of the present invention will be described hereinafter with reference to the drawings. It is to be noted that parts common with the respective drawings are denoted with the same reference numerals, and duplicate description is omitted.

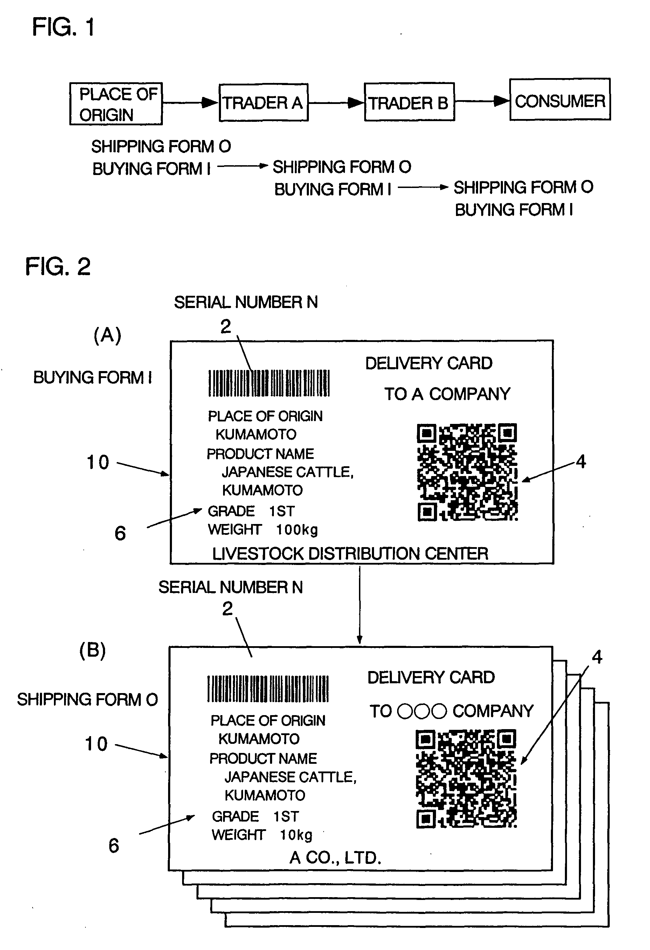

Fig. 1 is a schematic explanatory view of a commodity distribution industry to which the present invention is applied. This industry sells meats such as beef, pork, and chicken or fishes such as tuna (commodities) to consumers from a place of production or a fishing port (place of origin) via a plurality of traders A, B such as a distribution center, market, process center, supermarket, and general store. Each of these traders A, B receives, from a supplier (place of origin or trader), a buying form I in which the place of origin, grade, weight and the like are written, performs secondary processing such as subdivision, and prepares and attaches a new shipping form O every secondary processed product based on the buying form to ship the product.

It is to be noted that the plurality of traders are two companies A, B in this example, but the present invention is not limited to this example, and there may be a large number of traders such as three or more companies. A distribution path from the place of origin to the consumer is not limited to one way, and a large number of distribution paths including branched and combined paths may exist in an mixed manner. Furthermore, the present invention is especially suitable for the commodity distribution industry of commodities such as foods, but the present invention is not limited to this, and is applicable to any type of commodity.

In Fig. 1, in a false labeling preventing method of the present invention, each of traders A, B receives a buying form I in which commodity information is incapable of being falsified from a supplier, prepares a shipping form O including all contents of the buying form and new commodity information, and incapable of being falsified based on the buying form I, and attaches the form to a secondarily processed commodity to ship the commodity.

Since there is not any buying form I in a place of production or a place of origin such as a fishing port, the shipping form O can be individually prepared based on a cattle's ear tag, growth record, measurement result of tuna and the like. The shipping form O prepared in the place of origin has a function of displaying the place of origin as such. The shipping form O is used as such as a buying form I of a first trader A.

The trader A performs secondary processing of the commodity, and prepares one or more new commodities. Examples of the secondary processing include subdivision of commodities, cooking and the like, and a case where anything is not performed may be included. In parallel with the secondary processing, the trader A prepares the shipping form O including all the contents of the buying form and new commodity information, and incapable of being falsified based on the buying form I, and attaches the form to the secondarily processed commodity to ship the commodity. This shipping form O forms a buying form I of the next trader B.

The next trader B also performs individual secondary processing in the same manner as in the trader A, prepares a shipping form O, and attaches the form to the secondarily processed commodity to ship the commodity. The next trader (if any) similarly repeats the processing and shipping.

Finally, a final trader (trader B in this case) which directly sells the commodity to the consumer also prepares a shipping form O (commodity label in this case) including all the contents of the buying form and new commodity information, and incapable of being falsified based on the buying form I in parallel with the individual secondary processing, and attaches the form to the secondarily processed commodity to sell the commodity.

In the method of the present invention, labels 10 with reference to which information can be erased and written are used as the buying form I and shipping form O incapable of being falsified. Each label 10 is a rewritable label and/or an IC-chip-containing label with respect to which the information can be erased and written. Examples of the IC-chip-containing label include an IC card, IC tag and the like.

In the present invention, data may be recorded in a visible form (QR code, etc.) or in a invisible form (electric, magnetic information).

Moreover, a serial number N may have the visible form, or include the electric, magnetic information.

Furthermore, as to readable information, instead of a rewritable label, non-rewritable conventional photosensitive paper may be used.

Furthermore, a writing method may be of either a contact type (ink jet, thermal print, magnetic contact, electric contact) or a non-contact type (optical, electromagnetic induction, radio).

A case where the rewritable label is used as the label 10 will be described hereinafter.

Fig. 2 is a diagram showing one example of the rewritable label 10. The drawing shows a buying form I (A) and a shipping form O (B) of the trader.

As shown in this drawing, each rewritable label 10 for use in the method of the present invention has a barcode 2 in which the serial number N is written in a mode incapable of being erased, and an erasable two-dimensional code 4 for writing the commodity information.

It is to be noted that in a case where the label 10 is the IC-chip-containing label, a nonvolatile region (ROM) is used instead of the barcode 2, and a readable writable region (RAM) of a memory is used instead of the two-dimensional code 4. The rewritable label may be integrated and used with the IC-chip-containing label.

The barcode represents numerals, characters and the like in a machine readable form by combination of bars with spaces. The barcode has features such as reading speed and exactness and degree of operability, and has been already broadly used in not only foods and groceries but also slips and documents. In the present invention, the barcode 2 is written in a mode (e.g., printing) in which the serial number N cannot be erased. The number of digits of the barcode 2 is, for example, 10 to 20 digits, and the barcode may comprise numerals only or a combination of alphabets and numerals.

A conventional barcode includes a linear arrangement, whereas the two-dimensional code two-dimensionally represents this arrangement. As the two-dimensional code, QR code, PDF 417, data matrix, maxi code and the like have been already proposed. As compared with a conventional barcode, the two-dimensional code has an information amount which is large by several tens to hundreds of times, can represent hiragana, katakana, kanji characters, and binary data in addition to alphanumeric characters, and has characteristics such as a function of restoring data.

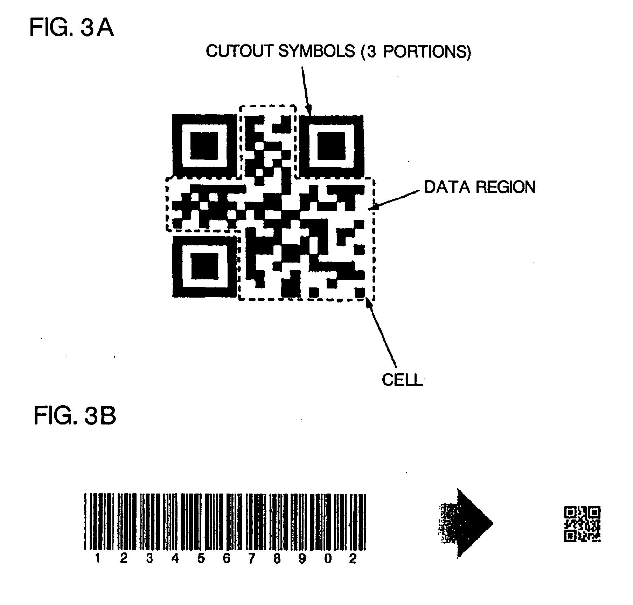

Figs. 3A and 3B show an example of a QR code which is one type of the two-dimensional code. As shown in Fig.3A, the QR code has three cutout symbols and a data region, and can handle any data such as numerals, alphabetic characters, chinese characters, kana characters, hiragana characters, symbols, binary code and control code. As shown in Fig.3B, the QR code represents data in both vertical and transverse directions, and therefore has an advantage that the data can be displayed in a size of about 1/10, if the information amount is equal to that of the conventional barcode. It is to be noted that basic specifications of the QR code are established in JIS X0503.

It is to be noted that the whole rewritable label 10 is reversible photosensitive paper, and commodity information 6 such as commodity contents is written in this label 10 in addition to the two-dimensional code 4. The commodity information 6 of the buying form I may differ from the commodity information 6 of the shipping form O in a range in which any quality error is not generated. In the example of Fig. 2, since a 100 kg commodity is divided into ten 10 kg commodities, ten shipping forms O in which a weight is set to 10 kg are prepared.

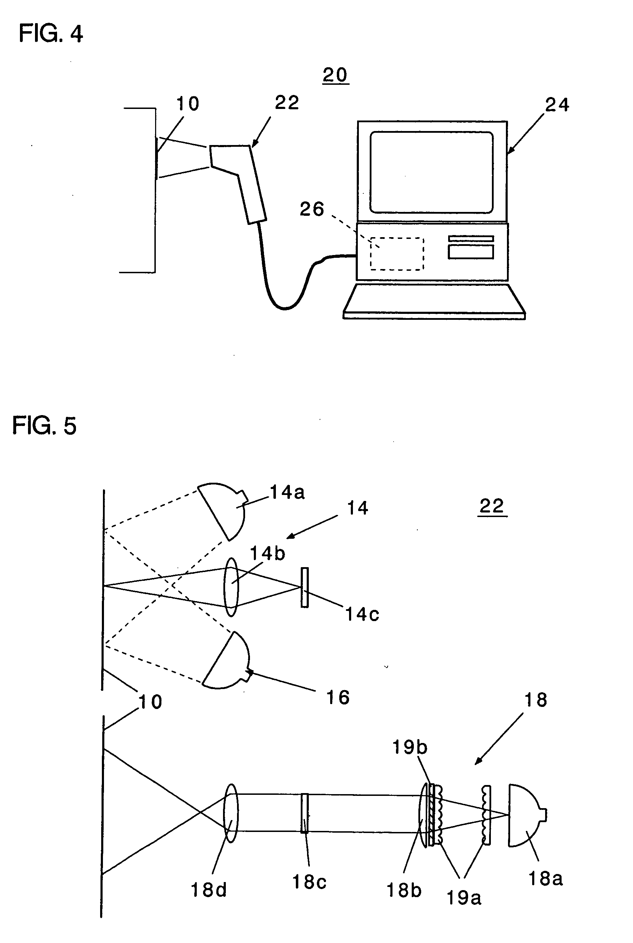

Fig. 4 is a whole constitution diagram of a label writing apparatus with a falsification preventing function of the present invention. As shown in the drawing, a label writing apparatus 20 of the present invention is constituted of a write head 22 capable of reading, erasing, writing the information, and a control device 24 which controls the write head 22.

Fig. 5 is a constitution diagram of the write head 22 of Fig. 4. In this example, the write head 22 includes a reading device 14, an erasing device 16, and a writing device 18, and it is possible to read, erase, write the information with respect to the label 10 with the single write head 22. It is to be noted that the present invention is not limited to this constitution, and the reading device, erasing device, and writing device may comprise separate devices.

In Fig. 5, the reading device 14 is constituted of a light source 14a, an optical system 14b, a CCD image sensor 14c, and the like, reflected light of the two-dimensional code 4 and the barcode 2 is digitally processed by the control device 24, and formed into data, and the contents of the data are read. As described above, the two-dimensional code 4 also includes the information 6 including at least commodity contents and the like.

The control device 24 is, for example, a personal computer (PC), has a storage device 26, and controls the reading device 14, erasing device 16, and writing device 18. In the storage device 26, checking performed by the label writing apparatus 20 at a time of arrival of commodities, and limited contents at a writing time are stored in a mode incapable of being falsified (e.g., writing into a ROM).

The erasing device 16 is, for example, a halogen lamp, and erases at least an information written portion of the label 10. In this example, the writing device 18 is constituted of a light source 18a, a condensing lens 18b, a liquid crystal panel 18c, a projection lens 18d, and the like, and writes the two-dimensional code 4 and the commodity information 6 in the label 10.

It is to be noted that in this example, reference numeral 19a denotes integrator lenses, 19b denotes a polarization conversion element, two integrator lenses 19a utilize light at high efficiency, and the polarization conversion element 19b unifies a polarization face, and further aligns a phase of wavelength.

A pulse light source such as a flash lamp may be used in the light source 18a used in an all surface simultaneous writing method (two-dimensional writing) of Fig. 5. That is, the liquid crystal panel 18c (exposure mask) is irradiated with an intense light source, an image of the exposure mask is formed on recording paper using an appropriate optical system, accordingly a desired portion is heated, and two-dimensional information can be simultaneously written in a moment.

It is to be noted that in the present invention, the label writing apparatus 20 is not limited to the above-described constitution, and another known system (e.g., Japanese Patent Application Laid-Open No. 2000-141892) may be used as long as the reading, erasing, and writing can be performed with respect to the rewritable label 10.

In the rewritable label 10 shown in Fig. 2, the commodity information of the supplier and the serial number N of the buying form I are written in the two-dimensional code 4 of the buying form I in the mode incapable of being falsified. At least some (e.g., supplier name, pointer of database, etc.) of the contents of the two-dimensional code 4 of the buying form I, new commodity information, and the serial number N of the shipping form O are written in the two-dimensional code 4 of the shipping form O in the mode incapable of being falsified.

It is to be noted that the contents are enormous, but all the contents of the two-dimensional code 4 of the buying form I may be written, when a storage capacity is sufficiently large.

In Fig. 2, as to the mode of the buying form I incapable of being falsified, for example, the mode of the above-described buying form I incapable of being falsified comprises commodity information and issuer name encrypted by a secret key inherent in the supplier, and the mode of the shipping form O incapable of being falsified comprises commodity information and issuer name encrypted by the secret key inherent in the shipper. The mode of the buying form I incapable of being falsified may comprise commodity information and public key encrypted by the secret key inherent in the supplier, and the mode of the shipping form O incapable of being falsified may comprise commodity information and public key encrypted by the secret key inherent in the shipper.

Here, the secret and public keys are means for encrypting documents for use in electronic mails and the like. The document encrypted by the secret key can be deciphered by the public key, and this also includes the opposite relation. Additionally, the secret key is absolutely kept to be secret, and the public key is broadly published. When enciphering and sending the document, the document is encrypted by the secret key, and sent to a target. The target can decode the document by the sender's public key and read the document.

It is to be noted that in the method of the present invention, the place of origin and a plurality of traders have inherent secret keys, and the public key is published in such a manner that anyone can access the key.

By this method, anyone can decipher the contents of the buying form I and shipping form O by the supplier's public key and the shipper's public key, but the falsification by the third party can be prevented because there is not any secret key.

Moreover, the mode of the buying form I incapable of being falsified may comprise commodity information to which electronic signature inherent in the supplier is attached, and the mode of the shipping form O incapable of being falsified may comprise commodity information to which the electronic signature inherent in the shipper is attached.

That is, the "electronic signature" is also usable in a case where the contents of the buying form I and the shipping form O do not have to be encrypted, but verification of the legitimacy is required. In this case, the sender passes an original plain sentence through "summary function", and obtains a summary number. This is encrypted by the secret key, attached to a plain sentence mail, and sent to a receiver. The receiver processes the plain sentence of the mail which has arrived by the same summary function, obtains a summary number, and compares it with "the summary number encrypted by the secret key, sent from the sender, and decoded by the sender's public key". When the both is the same, it can be verified that the mail has arrived without being falsified.

Therefore, even by this method, any third party can read the contents of the buying form I and the shipping form O, but the falsification by the third party can be prevented because the electronic signature is attached.

According to a preferable embodiment of the present invention, falsification capability of the buying form I is checked using the label writing apparatus 20 capable of reading, erasing, and writing information with respect to the rewritable label 10, and a shipping form O adapted to the buying form I is prepared only in a case where "falsification capability: NO".

By this method, since the label writing apparatus (20) checks the falsification capability of the buying form I, the false labeling or the forged copy in the supplier can be found early.

Moreover, the shipping form O adapted to the buying form I is prepared only in the case where "falsification capability: NO", and preparation of the shipping form O falsified by mistake can be prevented in advance.

The above-described label writing apparatus 20 has a function of reading, erasing, and writing the information with respect to the rewritable label 10, a checking function, a falsification preventing function, and a forging preventing function. These functions are realized by a program stored in a mode (e.g., writing into ROM) incapable of being falsified in the control device 24 and the storage device 26.

The checking function is a function of checking the falsification capability of the buying form I, and setting the shipping form O to be capable of being prepared only in a case where "falsification capability: NO".

The falsification preventing function is a function of writing at least some (e.g., supplier name, pointer of database, etc.) of the contents of the two-dimensional code 4 of the buying form I, new commodity information, and serial number N of the shipping form O in the two-dimensional code 4 of the shipping form O in the mode incapable of being falsified.

The forging preventing function is a function of setting a new shipping form O to be capable of being prepared only in a range in which a total amount of the buying form I is not exceeded, and erasing the original buying form I at a time of preparation of the shipping form O.

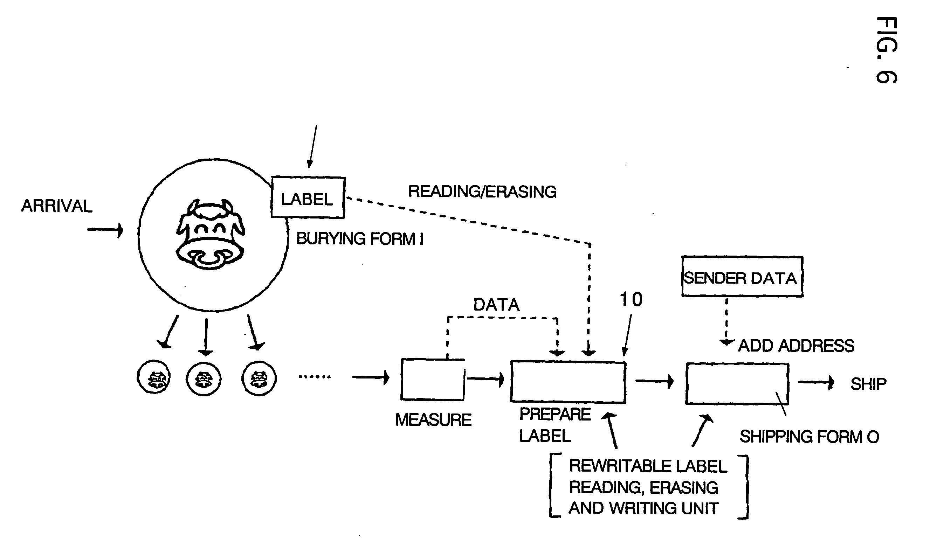

Fig. 6 is a diagram showing an embodiment of a false labeling preventing method of the present invention. This example shows a flow of business in a certain trader. It is to be noted that in this example, a case where a QR code is used as the two-dimensional code 4 will be described.

### (Format of QR Code of Label)

Two types of symbols (e.g., "{" and "}") which are not used in a plain sentence are used as identifiers of a cryptography sentence, and buried in the plain sentence. A format of the cryptography sentence is represented by a set of {byte number of public key, public key, byte number of cryptography sentence, cryptography sentence}. There is a cryptography sentence {...} in deciphering the cryptography sentence. When the sentence is deciphered, there are further a cryptography sentence together with a plain sentence. Since a multiple nested sentence is possible in this manner, tracing can be performed in a form in which history and legitimacy of the product are assured.

### (Contents of Cryptography Sentence)

A sentence is encrypted for authentication of an issuer, and falsification prevention of contents. Therefore, anyone can decipher the sentence.

The contents included in the cryptography sentence are a date, a serial number (assumed to be read beforehand) of a label to be written, an issuer name, contents (type, quality, quantity), data of a supplier, name of a destination and the like. The supplier's data is recursively recorded. Therefore, when the data is traced, even a primary producer (place of origin) can be traced. Moreover, since a correspondence table of the label serial numbers and the contents is stored in each trader, the supplier's name and the corresponding label serial number only are filled in, and a data amount can be saved.

### (Restricting Mechanism of Writing Unit)

The following restricting functions are imparted to the label writing apparatus 20 of the rewritable label for falsification prevention.
1. When the cryptography sentence on the outermost side of the nested label QR code is a cryptography sentence written by a key other than an owned secret key, "reading is possible, rewriting is prohibited".
2. When the cryptography sentence on the outermost side of the nested label QR code is prepared by the owned secret key, "shipper's name and the like are permitted to be freely added or changed, but it is impossible to change data indicating values of a product, such as quantity and quality".
3. When the contents are divided, the original label is erased, and the label can be issued in a range in which a divided total does not exceed an original amount.

### (Checking at Arrival Time)

The following three points are checked simultaneously with the reading of the buying form I.
1. The outermost public key agrees with the published supplier's public key? ... confirmation of signature
2. The label serial number written in the cryptography sentence agrees with the serial number written on the label? ... check of forged copy
3. The legitimate primary producer can be traced? ... check of legitimacy of the product

Concerning 1, in the above-described example, a pair of the public key and cryptography is handled. This has an advantage that the contents can be read in a use method in which, for example, a handheld reader having a deciphering function is used without any correspondence table of the public key and issuer.

Moreover, spaces may be saved by a system in which the issuer and the cryptography are assumed to form a pair, and the public key is necessarily obtained from the table. Since the correspondence table of the public key and writer is originally published, the table may be in a form readable by anyone in a certain server.

### (Operation at Shipping Time)

Pairs of label serial numbers and contents are added to a database within a company preparing for inquiry of the contents from the serial number, and centralization of future database. A portion of the QR code is replaced with an IC chip, and data may be exchanged by radio.

The barcode 2 and the two-dimensional code 4 of the buying form I are read using the above-described label writing apparatus 20, and legitimacy of the supplier's public key or electronic signature, and identity of the serial numbers of the barcode 2 and the two-dimensional code 4 are checked. It is judged that "falsification capability: NO" only in case of legitimacy and identity. Accordingly, the legitimacy of the public key or the electronic signature, and the forged copy can be easily checked. Therefore, the false labeling or the forged copy in the supplier can be found early.

Moreover, the falsification capability of the buying form I is checked using the above-described label writing apparatus 20. Only in a case where "falsification capability: NO", at least some (e.g., supplier name, pointer of database, etc.) of the contents of the two-dimensional code 4 of the buying form I, new commodity information, and serial number N of the shipping form O are written in the two-dimensional code 4 of the shipping form O in the mode incapable of being falsified. Moreover, as to the new commodity information, a plurality of shipping forms O are prepared only in a range in which the total amount of the buying form I is not exceeded. Furthermore, the original label is automatically erased, accordingly false labeling is prevented, and "traceability" is secured. Additionally, an extra shipping form can be prevented from being prepared or abused exceeding the total amount of the buying form I. Moreover, the contents of the buying form I are erased simultaneously with the preparation of the shipping form O, and use-around such as double use can be prevented.

According to the above-described method of the present invention, the buying form I received from the supplier is incapable of being falsified. The shipping form O attached to and shipped with a secondarily processed commodity includes all the contents of the buying form, and new commodity information based on the buying form I, and is incapable of being falsified. The steps are repeated, and the commodity information of the first shipper to all the traders are written in a label (corresponding to the buying form I) attached to the commodity (e.g., food) which has reached a final consumer in a state incapable of being falsified.

Therefore, in a case where new commodity information different from that of the buying form I is added in a certain trader, the difference (i.e., falsification or false labeling) of the contents is instantly detected by the next trader which has bought the commodity, and therefore the false labeling can be prevented in advance. Even if a plurality of traders do not notice the false labeling (falsification), and the false labeling is found after the commodity has reached the consumer, the distribution route of the commodity is exactly traced (securing of "traceability"), and the trader (dishonest dealer) which has performed the false labeling can be instantly specified. Because the commodity information of the first shipper to all the traders are written in the state incapable of being falsified.

Moreover, according to the label writing apparatus with the falsification preventing function of the present invention, since the falsification capability of the buying form I is checked by the checking function of the label writing apparatus, the false labeling or the forged copy in the supplier can be found early.

Furthermore, by the falsification preventing function, the false labeling can be prevented, and the "traceability" can be secured.

Additionally, by the forging preventing function of the label writing apparatus, the extra shipping form can be prevented from being prepared or abused exceeding the total amount of the buying form I. Moreover, the contents of the buying form I are erased simultaneously with the preparation of the shipping form O, use-around such as double use can be prevented, and the padding of a high-quality product can be prevented.

Therefore, the false labeling preventing method in the commodity distribution and the label writing apparatus with the falsification preventing function for use in this method according to the present invention have superior effects that (1) the prevention of the false labeling, (2) the securing of the "traceability", and (3) the specifying of the dishonest dealer and the padding prevention can be realized with a comparatively simple facility, and the method and apparatus are easily spread in the whole industry.

It is to be noted that the present invention has been described in accordance with several preferable embodiments, and it would be understood that a rights range included in the present invention is not limited to these embodiments. Conversely, the rights range of the present invention includes all improvements, modifications, and equivalents included in the accompanying claims.

## Claims

1. A false labeling preventing method in commodity distribution, comprising the steps of:
receiving from a supplier a buying form I of commodity information, which is incapable of being falsified;
preparing a shipping form O including all contents of the buying form and new commodity information and incapable of being falsified based on the buying form I; and
attaching the shipping form to the secondarily processed commodity and shipping the commodity.

2. The false labeling preventing method in the consumer distribution according to claim 1, further comprising the steps of:
using information erasable and writable labels (10) as the buying form I and shipping form O incapable of being falsified, each of the labels comprising a read-only storage region (2) written in a mode in which a serial number N is incapable of being erased, and an erasable writable storage region (4) for writing the commodity information;
writing the supplier's commodity information and the serial number N of the buying form I in a two-dimensional code (4) of the buying form I in a mode incapable of being falsified; and
writing at least some of the contents of the two-dimensional code (4) of the buying form I, the new commodity information, and the serial number N of the shipping form O in the two-dimensional code (4) of the shipping form O in the mode incapable of being falsified.

3. The false labeling preventing method in the commodity distribution according to claim 2, wherein the label (10) is a rewritable label and/or a label with an IC chip, with respect to which it is possible to erase and write the information, the read-only storage region (2) is a barcode or ROM written in a mode in which it is impossible to erase the serial number N, and the writable storage region (4) is an erasable two-dimensional code and/or RAM.

4. The false labeling preventing method in the commodity distribution according to claim 2, wherein the mode of the buying form I incapable of being falsified comprises commodity information and its issuer name encrypted by a secret key inherent in the supplier, and the mode of the shipping form O incapable of being falsified comprises commodity information and its issuer name encrypted by a secret key inherent in the shipper.

5. The false labeling preventing method in the commodity distribution according to claim 2, wherein the mode of the buying form I incapable of being falsified comprises commodity information and its public key encrypted by a secret key inherent in the supplier, and the mode of the shipping form O incapable of being falsified comprises commodity information and its public key encrypted by a secret key inherent in the shipper.

6. The false labeling preventing method in the commodity distribution according to claim 2, wherein the mode of the buying form I incapable of being falsified comprises commodity information to which electronic signature inherent in the supplier has been attached, and the mode of the shipping form O incapable of being falsified comprises commodity information to which electronic signature inherent in the shipper has been attached.

7. The false labeling preventing method in the commodity distribution according to claim 1 or 2, further comprising the steps of: checking falsification capability of the buying form I using a label writing apparatus (20) capable of reading, erasing, and writing the label (10); and preparing the shipping form O adapted to the buying form I only in a case where "falsification capability: NO".

8. The false labeling preventing method in the commodity distribution according to claim 7, further comprising the steps of:
reading the read-only storage region (2) and the writable storage region (4) of the buying form I;
checking legitimacy of the supplier's public key or electronic signature, and identity of the serial numbers of the read-only storage region (2) and the writable storage region (4); and
judging that " falsification capability: NO " only in a case when the public key or the electronic signature is legitimate and the serial numbers are the same.

9. The false labeling preventing method further comprising the steps of:
writing at least some of the contents of the two-dimensional code (4) of the buying form I, new commodity information, and the serial number N of the shipping form O in the writable storage region (4) of the shipping form O in a mode incapable of being falsified; and
setting a new shipping form O to be capable of being prepared only in a range in which a total amount of the buying form I is not exceeded, and erasing the original buying form I at a time of preparation of the shipping form O.

10. A label writing apparatus with a
falsification preventing function, for receiving a buying form I of commodity information from a supplier, preparing a shipping form O including new commodity information based on the buying form I, and attaching the shipping form to a secondarily processed commodity to ship the commodity,
the buying form I and the shipping form O comprising: labels (10) each comprising a read-only storage region (2) in which a serial number N is written in a mode incapable of being erased, and an erasable writable storage region (4) for writing the commodity information, and the labels being capable of erasing and writing the information,
the label writing apparatus having a function of reading, erasing, and writing the information with respect to the label (10), a check function of checking falsification capability of the buying form I, and setting the shipping form O to be capable of being prepared only in a case where "falsification capability: NO", a falsification preventing function of writing, in the two-dimensional code (4) of the shipping form O, at least some of the contents of the writable storage region (4) of the buying form I, new commodity information, and the serial number N of the shipping form O in a mode incapable of being falsified, and a forging preventing function of setting a new shipping form O to be capable of being prepared only in a range in which a total amount of the buying form I is not exceeded, and erasing the original buying form I at a time of the preparation of the shipping form O.

11. The label writing apparatus with the falsification preventing function according to claim 10, wherein the label (10) is a rewritable label and/or an IC-chip-containing label capable of erasing and writing the information, the read-only storage region (2) is a bar code or a ROM in which the serial number N is written in a mode incapable of being erased, and the writable storage region (4) is an erasable two-dimensional code and/or a RAM.
